# EUROPÄISCHE PATENTSCHRIFT

(11) **EP 1 683 246 B1**
(45) Veröffentlichungstag und Bekanntmachung des Hinweises auf die Patenterteilung: **18.04.2018**
(21) Anmeldenummer: 04797629.5
(22) Anmeldetag: 05.11.2004
(51) Int. Cl.: H02B 13/035

(54) **MITTELSPANNUNGSSCHALTANLAGE**
MEDIUM VOLTAGE SWITCHGEAR
INSTALLATION DE DISTRIBUTION A MOYENNE TENSION

(30) Priorität: 07.11.2003 DE 10351948
(43) Veröffentlichungstag der Anmeldung: 26.07.2006
(73) Patentinhaber: ABB Schweiz AG, 5400 Baden (CH)
(72) Erfinder: FINK, Harald, 40882 Ratingen (DE)
(74) Vertreter: Schmidt, Karl Michael
(86) Internationale Anmeldenummer: PCT/EP2004/012508
(87) Internationale Veröffentlichungsnummer: WO 2005/046014

(56) Entgegenhaltungen:
- EP-A- 1 020 970
- EP-A- 1 109 186
- FR-A- 2 735 913
- FR-A- 2 735 914
- US-B1- 6 373 015

## Beschreibung

Die Erfindung betrifft eine Mittelspannungsschaltanlage mit mindestens zwei Schaltfeldern, gemäß Oberbegriff des Patentanspruchs 1.

Mittelspannungsschaltanlagen als solche sind bekannt. Diese sind mit sogenannten Last- und/oder Leistungschaltern versehen.
In bekannter Bauform sind innerhalb eines Schaltanlagengehäuses Leistungsschalter als Vakuumschalter bekannt. Sind auch Lastschalter vorhanden, dann sind diese im allgemeinen nicht als Vakuumschalter ausgestaltet. Um eine entsprechende Isolation und bei offenen Lastschaltern auch eine Löschung zu gewähren sind Schaltanlagengehäuse mit Isoliergas gefüllt. Hierbei wird oftmals SF_{6'} als Isoliergas verwendet.

Bei Schaltanlagen dieser Art sind die Schalter jeweils für alle drei Drehstromphasen vorgesehen, und so wird jeder Schalter als dreiphasiges Schaltelement ausgebildet.

Bei den Schaltvorgängen entstehen mehr oder weiniger stark ausgeprägte Lichtbögen, je nachdem ob diese Lastfrei oder ggfs sogar miot Kurzschlussströmen geschaltet werden. In allen Fällen, also in Fällen lastfreier Schaltvorgänge muss die Anlage genauso sicher sein und schalten, wie in Fehlerfällen, d.h. bei Kurzschlussströmen.

Wichtiges Kriterium ist daher die besagte Isolation. Da Schaltanlagen dieser Art bei einer Phase-Phase-Effektivspannung bis ca 50 KV betrieben werden, ergeben sich bauliche Mindestabstände.
Aus der FR 2 735 914 A, der FR 2 735 913 A, sowie der US 6 373 015 B1 sind Mittelspannungsschaltanlagen bekannt, bei denen das Lastschalterfeld und das Leistungsschalterfeld gemeinsam oder abgeschottet angeordnet sind, und sowohl das Lastschalterfeld, als auch das Leistungsschalterfeld als Vakuumschalter ausgeführt sind. Dies umfasst aber noch nicht alle notwendigen Komponenten.

Der Erfindung liegt daher die Aufgabe zugrunde, eine Mittelspannungsschaltanlage der gattungsgemäßen Art dahingehend weiterzuentwickeln, dass eine kompaktere Bauform bei gleichzeitger Gewährung sicherer Isolation innerhalb des Schaltanlagengehäuses gegeben ist.

Die gestellte Aufgabe wird bei einer Mittelspannungsschaltanlage der gattungsgemäßen Art erfindungsgemäß durch die kennzeichnenden Merkmale des Patentanspruches 1 gelöst.

Weitere vorteilhafte Ausgestaltungen sind in den abhängigen Ansprüchen angegeben.

Kern der Erfindung ist, dass 2 Lastschaltfelder (LS1, LS2) und 1 Leistungschaltfeld (PS) in der Schaltanlage angeordnet sind.

Dadurch wird eine hohe Kompaktheit bei gleichzeitiger Erfüllung der Isolationsanforderungen innerhalb der Schaltanlage gewährleistet. Im Gegensatz dazu sind sogenannte gasisolierte Anlagen nur im Bereich der Leistungsschalter mit Vakuumschaltkammern versehen. Lastschalter werden in gasisolierten Anlagen üblicherweise mit offenen Kontakten gebaut wobei im Inneren der Schaltanlage Isoliergas, beispielsweise SF₆ vorgesehen ist. Im vorliegenden Fall werden jedoch sowohl Lastschalter als auch Leistungsschalter mit Vakuumschaltkammern ausgeführt, wodurch hierdurch eine deutlich höhere bauliche Kompaktierung möglich ist, als bei Schaltanlagen der beschriebenen bekannten Bauart.
Die erfindungsgemäße Bauart gemäß Anspruch 1, führt zu einer hohen Kompaktheit und Funktionalität.

Weiterhin kann die Schaltanlage im Inneren des Schaltanlagengehäuses mit Isoliergas befüllt sein. Dies ist optional, um eine gute Isolation spannungsführender Teile ausserhalb der eigentlichen Schaltkammern zu gewährleisten.

So können innerhalb des Schaltanlagengehäuses Trenner angeordnet sein, die entweder von dem Isolationsgas innerhalb des Schaltanlagengehäuses oder auf andere Weise isoliert sein können.

Auf Isoliergas, wenn es gleichzeitig Löschfunktion besitzt, kann ganz verzichtet werden, wenn der oder die Trenner als Schalter mit Vakuumkammer ausgebildet ist bzw sind.

In weiterer vorteilhafter Ausgestaltung ist vorgesehen, dass der oder die Trenner als Dreistellungsvakuumschalter ausgebildet ist bzw sind. Auf diese Weise lassen sich die drei Schaltstellungen "geschlossen", "offen", "geerdet" in einem Trenner und vor allem unabhängig von einem Isoliergas innerhalb der Schaltanlage betreiben.

In weiterer vorteilhafter Ausgestaltung ist vorgesehen, dass die Schalter und/oder die Vakuumkammern von einer Feststoffisolierung umgeben sind. Dadurch lassen sich die Vakuumschlatkammern sehr kompakt anordnen.

Ein Ausführungsbeispiel der Erfindung ist in der Zeichnung dargestellt und nachfolgend näher beschrieben.

Es zeigt:
- Figur 1:: Schaltfunktionsdarstellung
- Figur 2:: Schaltanlagengehäuse

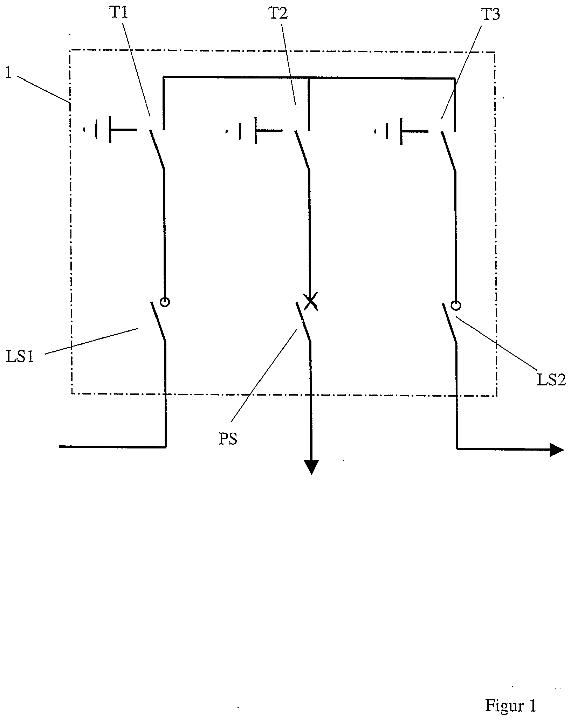

Figur 1 zeigt die Schaltskizze für einen Schaltblock bestehend aus drei Schaltfeldern. Der dargestellte Pfad ist hier nur für eine Phase gezeigt. Tatsächlich existiert dieser für die drei Phasen L1, L2, und L3, also drei mal in einer Schaltanlage. D.h. jeder dargestellte Schalter repräsentiert jeweils die Schalter für alle drei Phasen, von denen hier nur eine dargestellt ist. Ein jeweils hier dargestellter Schalter ist dann Teil eines sogenannten Schaltfeldes. Die beiden äußeren Schaltfelder beinhalten Lastschalter LS1, bzw LS2, und das mittlere Schaltfeld einen Leistungsschalter PS.

Der Leistungsschalter PS dient dabei als Abgang zum Transformator oder Motor bzw sonstigen Verbraucher und/oder als Abgang für ein weiteres Lastschalterfeld zur Fortführung des Ringes. Die Lastschalter LS1, LS2 sind wieder mit anderen Schaltanlagen oder dem hier nicht weiter dargestellten Ringkabelfeld verbunden.

Die Lastschalter LS1 und LS2 sind dabei phasenweise in Reihe zusammen geschaltet, und parallel auch noch mit dem Leistungsschalter PS verbunden. Oberhalb der Schalter bzw Schaltfelder sind sogenannte Trenner T1, T2 und T3 angeordnet. Diese Trenner sind als Dreistellungsschalter ausgestaltet, die die Schaltstellungen "geschlossen", "offen" und "geerdet" aufweisen.

Erfindungsgemäß sind nun die Last- und Leistungsschalter LS1, LS2, .. sowie PS als Schalter mit Vakuumkammern ausgebildet, wodurch eine sehr kompakte Bauform entsteht, da durch dieselben erheblich geringere Isolationsabstände realisierbar sind.

Weiterhin sind die Trenner T1, T2, T3 als Schalter mit Vakuumkammern ausgebildet.

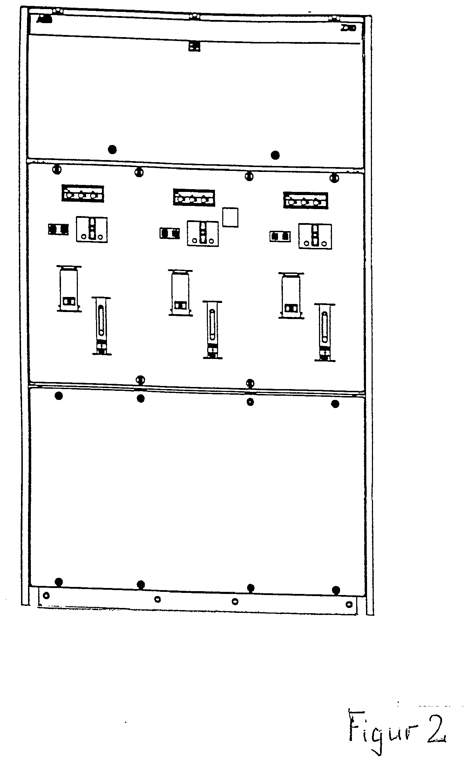

Figur 2 zeigt ein aus drei Schaltfeldern bestehendes sogenanntes Ringkabelfeld (RKF).

Im Falle eines RKF bilden meist 3 Schaltfelder einen Schaltblock. Der Schaltblock ist als eine Kapselung ausgeführt, d.h. die einzelnen Felder sind hier gegeneinander nicht geschottet.

Der Schaltblock beinhaltet ein Lastschalterfeld zur Einführung des Ringes, ein Leistungsschalterfeld als Abgang zum Transformator oder Motor und/oder ein weiteres Lastschalterfeld zur Fortführung des Ringes. Last- und Leistungsschalter sind hier in erfindungsgemäßer Weise beide als Vakuumschaltgeräte ausgeführt. Jedes der 3 Schaltgeräte besitzt in der Verbindung zur Sammelschiene einen herkömmlichen Dreistellungsschalter als Trenner, der hier als sogenannter Schubschalter ausgeführt sein kann.

Die Kompaktheit dieser, ggfs nicht mit SF6 gefüllten Kapselung, d.h. das Gehäuse der Schaltanlage wird dadurch erreicht, das anstelle herkömmlicher, z.B. luftlöschender Lastschalter, die entsprechend große Abmessungen haben, Vakuumkammern eingesetzt werden, die auch aus dielektrischen Gründen in Gießharz eingegossen sind. Dadurch werden gleichzeitig Orte erhöhter Feldstärke dielektrisch abgeschirmt. Die Vakuumkammern übernehmen alle Schaltaufgaben.

Der Dreistellungschalter ist gleichfalls kompakt ausgeführt, da er zwar isolieren, aber keine Ströme schalten muß bzw. lastfrei schaltet. Das erfordert spezielle Verriegelungen mit dem eigentlichen Schaltgerät. Verrundete Elektroden bzw. Komponenten führen zur Vergleichmäßigung der elektrischen Feldstärken.

Ausdrücklich muß darauf hingewiesen werden, dass - wie allgemein bekannt - die Kompaktheit nicht auf dem Einsatz von SF6, welches eine hohe dielektrische Festigkeit besitzt, beruht. In unserem Fall ist das RKF mit N2 gefüllt, welches eine 3-fach schlechtere dielektrische Festigkeit hat.

Ein Ringkabelfeld kann auch aus mehr als 3 Feldern bestehen.

Ein Schaltblock hat jeweils einen gemeinsamen Gasraum und bildet eine Transporteinheit. Die Schaltblöcke werden fabrikfertig komplett ausgebaut und als geschlossenes, sowohl primär- als auch sekundärtechnisch geprüftes System geliefert.

Die Felder eines Schaltblockes können auch gegeneinander gasdicht geschottet sein. Die Schaltblöcke wiederum können sammelschienenseitig über die bekannte Stecktechnik miteinander verbunden werden.

Die Kabelstecksysteme können mit Innen- oder Außenkonus ausgeführt werden. Im hier vorliegenden Beispiel ist ein Innenkonussystem vorhanden.

Die unterschiedlichen Schaltfeldvarianten mit Leistungsschalter oder Lastschalter sowie Sammelschienen-Längskupplung mit Hochführung oder Sammelschienenerdung lassen sich in beliebiger Reihenfolge zu Schaltblöcken aneinanderfügen.

Generell werden Standardkomponenten eingesetzt, so dass auch bereits im Betrieb befindliche Anlagen bzw. Felder getauscht oder erweitert werden können.

## Patentansprüche

1. Mittelspannungsschaltanlage als Ringkabelfeld mit mindestens 2 Schaltfeldern, wobei innerhalb einem Schaltanlagengehäuse (1) mindestens 1 Lastschalterfeld (LS1, ..) und 1 Leistungsschalterfeld (PS) gemeinsam oder gegeneinandergeschottet angeordnet sind, und dass sowohl das Lastschalterfeld als auch das Leistungsschalterfeld mit Vakuumschalter ausgeführt sind,
**wobei** innerhalb jedes Schaltfelds ein Trenner (T1, T2, T3) angeordnet ist, der als Schalter mit Vakuumkammer ausgebildet ist, **dadurch gekennzeichnet,**
**dass** 2 Lastschaltfelder (LS1, LS2) und 1 Leistungschaltfeld (PS) in der Schaltanlage angeordnet sind.

2. Mittelspannungsschaltanlage nach Anspruch 1,
**dadurch gekennzeichnet,**
**dass** das Innere des Schaltanlagengehäuses (1) mit Isoliergas befüllt ist.

3. Mittelspannungsschaltanlage nach Anspruch 2,
**dadurch gekennzeichnet,**
**dass** der oder die Trenner (T1, T2, T3) als Dreistellungsvakuumschalter ausgebildet ist bzw sind.

4. Mittelspannungsschaltanlage nach einem der vorhergehenden Ansprüche,
**dadurch gekennzeichnet,**
**dass** die Schalter und/oder die Vakuumkammern von einer Feststoffisolierung umgeben sind.

## Claims

1. Medium-voltage switchgear assembly as ring cable
panel having at least two switch panels,
wherein at least 1 load switch panel (LS1, ...) and 1 power switch panel (PS) are arranged jointly or compartmentalized from one another within a switchgear assembly enclosure (1), and in that both the load switch panel and the power switch panel are designed with a vacuum switch, wherein an isolator (T1, T2, T3) is arranged within each switch panel, which isolator is in the form of a switch with a vacuum chamber,
**characterized in that**
2 load switch panels (LS1, LS2) and 1 power switch panel (PS) are arranged in the switchgear assembly.

2. Medium-voltage switchgear assembly according to Claim 1,
**characterized in that**
the interior of the switchgear assembly enclosure (1) is filled with insulating gas.

3. Medium-voltage switchgear assembly according to Claim 2,
**characterized in that**
the isolator or isolators (T1, T2, T3) is or are in the form of a three-position vacuum switch or switches.

4. Medium-voltage switchgear assembly according to one of the preceding claims,
**characterized in that**
the switches and/or the vacuum chambers are surrounded by solid insulation.

## Revendications

1. Installation de commutation moyenne tension en tant que cellule interrupteur-disjoncteur avec au moins deux panneaux de couplage,
au moins un panneau de commutateur de charge (LS1, ...) et un panneau de commutateur de puissance (PS) étant disposés ensemble ou de façon cloisonnée l'un par rapport à l'autre à l'intérieur d'un boîtier d'installation de commutation (1), et en ce qu'aussi bien le panneau de commutateur de charge que le panneau de commutateur de puissance sont réalisés avec un interrupteur à vide,
un sectionneur (T1, T2, T3) étant disposé à l'intérieur de chaque panneau de couplage et étant constitué en tant qu'interrupteur avec chambre à vide,
**caractérisée en ce que**
deux panneaux de commutateur de charge (LS1, LS2) et un panneau de commutateur de puissance (PS) sont disposés dans l'installation de commutation.

2. Installation de commutation moyenne tension selon la revendication 1,
**caractérisée en ce que**
l'intérieur du boîtier d'installation de commutation (1) est rempli de gaz isolant.

3. Installation de commutation moyenne tension selon la revendication 2,
**caractérisée en ce que**
le ou les sectionneurs (T1, T2, T3) est ou sont respectivement constitué(s) en tant qu'interrupteur à vide à trois positions.

4. Installation de commutation moyenne tension selon l'une des revendications précédentes,
**caractérisée en ce que**
les interrupteurs et/ou les chambres à vide sont entouré(e)s d'une isolation solide.
